# EUROPÄISCHE PATENTSCHRIFT

(11) **EP 0 466 015 B1**
(45) Veröffentlichungstag und Bekanntmachung des Hinweises auf die Patenterteilung: **26.04.1995**
(21) Anmeldenummer: 91111036.9
(22) Anmeldetag: 03.07.1991
(51) Int. Cl.: B29D 30/00, B29C 37/02, B25J 15/00

(54) **Vorrichtung zum Fixieren eines Reifens**
Tyre-holding device
Dispositif de maintien d'un pneu

(30) Priorität: 12.07.1990 DE 4022188
(43) Veröffentlichungstag der Anmeldung: 15.01.1992
(73) Patentinhaber: Linde Aktiengesellschaft, 65189 Wiesbaden (DE)
(72) Erfinder: Rebhan, Dieter, Ing.(grad.), W-8192 Geretsried (DE); Wolf, Erich Ing., W-8023 Pullach (DE); Klane, Bernd, Dipl.-Ing., W-8000 München (DE)
(74) Vertreter: Schaefer, Gerhard, Dr.

(56) Entgegenhaltungen:
- FR-A- 2 568 161
- US-A- 3 835 633
- US-A- 3 844 002
- US-A- 4 680 246
- US-A- 4 783 108

## Beschreibung

In der Reifenfertigung wird der vulkanisierte Reifen weiteren Bearbeitungsschritten, wie Entgraten und Vermessen, unterzogen. Da es zu aufwendig ist, den Reifen vorübergehend auf eine Felge zu ziehen, werden für eine Einspannung soganannte Stufenfelgen eingesetzt. Da Reifen mit verschiedenen Felgendurchmessern bearbeitet werden, sind auf einer Stufenfelge die Schultern mehrerer Felgengrößen nachgebildet. Die Stufenfelge ist in zwei Hälften geteilt, die in axialer Richtung von beiden Seiten an den Reifen herangefahren werden.

Es können auch Naben verwendet werden, die aus mehreren radial verschiebbaren Segmenten bestehen. Diese Segmente werden durch ein Getriebe gleichmäßig gegen den Reifenwulst gepreßt.

Bei den üblicherweise verwendeten Stufenfelgen besteht die Gefahr, daß aufgrund hoher seitlicher Anpreßkräfte, die einen strammen Sitz des Reifens bewirken sollen, der Reifen deformiert wird. Außerdem werden kleine Reifen (z.B. 14 Zoll) durch die Felgenschultern großer Reifen (z.B. 16 Zoll) seitlich abgedeckt. Eine Bearbeitung oder Vermessung der Seitenflanken ist dann nur eingeschränkt möglich. Der Reifen muß immer in radialer Richtung in die einspannende Maschine eingeführt werden und zwischen beiden Felgenhälften genau positioniert werden.

Die Segmentnabe ist konstruktiv eine komplizierte Vorrichtung, deren Herstellung und Wartung aufwendig sind. In den Fugen zwischen den Segmenten können sich Verunreinigungen sammeln, die eine präzise Bewegung der Segmente behindern. Der eingespannte Reifen ist nicht gasdicht abgeschlossen, so daß beispielsweise beim Entgraten verwendeter flüssiger Stickstoff in das Reifeninnere gelangen kann, was bei größeren Mengen zur Zerstörung des Reifens aufgrund von Versprödung und thermischen Spannungen führt.

Der vorliegenden Erfindung liegt die Aufgabe zugrunde, eine Vorrichtung zum Fixieren eines Reifens bereitzustellen, die leicht zu bedienen und einfach zu bauen ist und bei der die obengenannten Nachteile der bekannten Vorrichtungen nicht auftreten.

Diese Aufgabe wird erfindungsgemäß dadurch gelöst, daß axial zum Reifen ein aufblasbarer Balg angeordnet ist, der im aufgeblasenen Zustand an den Reifenwülsten anliegt.

In den Unteransprüchen sind weitere Ausgestaltungen der Erfindung genannt.

Die Erfindung ermöglich, den Reifen fest und zentriert einzuspannen, ohne daß dieser deformiert wird. Über den Kraftschluß zwischen Reifenwulst und Balg können hohe Kräfte übertragen werden (Drehmoment, axiale und radiale Kräfte). Der Reifen wird auf seiner Außenseite nicht abgedeckt, so daß die Bearbeitung nicht behindert wird. Außerdem wird der Innenraum des Reifens gasdicht abgeschlossen.

Im folgenden soll die Erfindung anhand eines in der Zeichung schematisch dargestellten Aussführungsbeispiels näher erläutert werden.

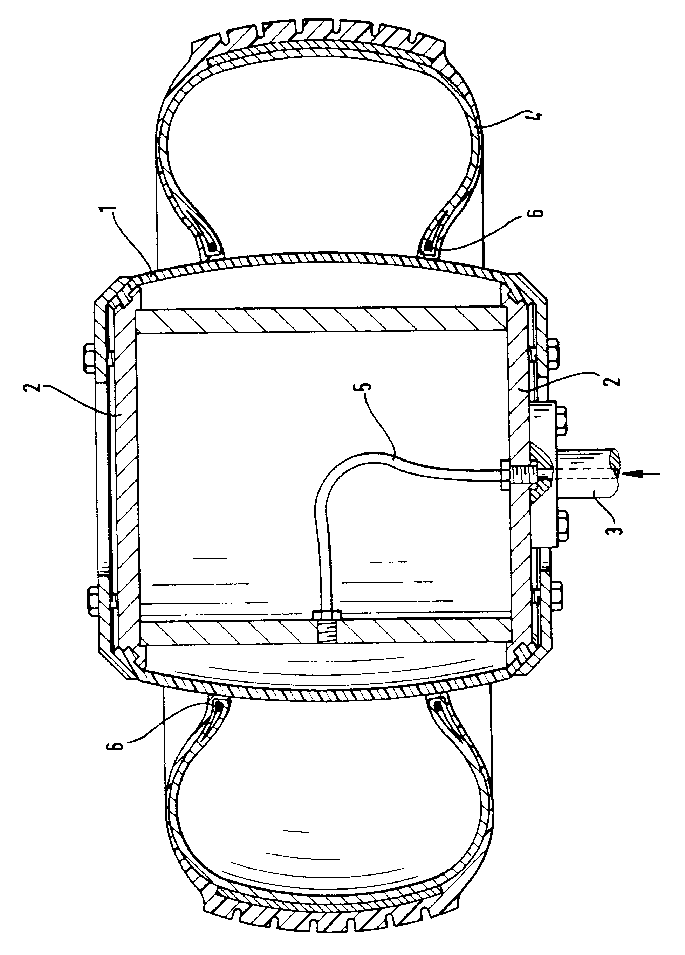

Die Figur zeigt einen Schnitt durch einen Balg im aufgeblasenen Zustand mit montiertem Reifen.

Auf einer trommelförmigen Einspannung (2) ist ein Gummibalg (1) befestigt. Über eine Hohlwelle (3) und Schlauchverbindung (5) läßt sich Druckluft in den Zwischenraum zwischen Balg (1) und Trommel (2) übertragen. Dadurch wird der Balg (1) aufgeblasen, bis er sich gegen die Wülste (6) des umgelegten Reifens (4) drückt und diesen einspannt. Durch den Aufblasvorgang wird der Reifen auf der Vorrichtung zentriert. Die Höhe des Innendrucks bestimmt, wie fest der Reifen auf dem Balg (1) sitzt. Der Reifen (4) wird auch bei fester Einspannung nicht deformiert, da nur radiale Kräfte auf die üblicherweise mit Stahlkern ausgerüsteten Reifenwülste übertragen werden. Durch Ablassen des Überdrucks zieht sich der Balg (1) wieder zusammen und der Reifen (4) kann abgenommen werden. Mit dieser Vorrichtung können Reifen mit mindestens drei verschiedenen Felgengrößen (z.B 14 Zoll - 16 Zoll) eingespannt werden.

## Patentansprüche

1. Vorrichtung zum Fixieren eines Reifens, dadurch gekennzeichnet, daß axial zum Reifen (4) ein aufblasbarer Balg (1) angeordnet ist, der im aufgeblasenen Zustand an den Reifenwülsten (6) anliegt.

2. Vorrichtung nach Anspruch 1, dadurch gekennzeichnet, daß der Balg (1) auf einer axial zum Reifen(4) angeordneten trommelförmigen Einspannung (2) befestigt ist.

3. Vorrichtung nach Anspruch 2, dadurch gekennzeichnet, daß die trommelförmige Einspannung (2) eine vorzugsweise auf der Reifenachse angeordnete Hohlwelle (3) aufweist, die einerseits mit einem außerhalb der trommelförmigen Einspannung (2) angeordneten Druckerzeuger und andererseits mit dem Innenraum des Balgs (1) in Verbindung steht.

## Claims

1. Device for holding a tyre, characterized in that an inflatable bellows (1) which, when inflated, rests against the tyre beads (6) is arranged axially with respect to the tyre (4).

2. Device according to Claim 1, characterized in that the bellows (1) is secured on a drum-shaped restraint (2) arranged axially with respect to the tyre (4).

3. Device according to Claim 2, characterized in that the drum-shaped restraint (2) has a hollow shaft (3), which is preferably arranged on the axis of the tyre, this hollow shaft being connected, on the one hand, to a pressure generator arranged outside the drum-shaped restraint (2) and, on the other hand, to the interior of the bellows (1).

## Revendications

1. Dispositif de fixation d'un pneu, caractérisé en ce qu'axialement au pneu (4) est disposé un soufflet (1) gonflable, qui est appliqué contre les talons du pneu (6) dans l'état gonflé.

2. Dispositif selon la revendication 1, caractérisé en ce que le soufflet (1) est fixé sur une fixation (2) en forme de tambour disposée axialement par rapport au pneu (4).

3. Dispositif selon la revendication 2, caractérisé en ce que la fixation (2) en forme de tambour présente un arbre creux (3) disposé de préférence sur l'axe du pneu, qui est connecté d'une part avec un générateur de pression disposé en-dehors de la fixation (2) en forme de tambour, et d'autre part avec l'espace interne du soufflet (1).
